# EUROPÄISCHE PATENTSCHRIFT

(11) **EP 3 036 139 B1**
(45) Veröffentlichungstag und Bekanntmachung des Hinweises auf die Patenterteilung: **21.02.2018**
(21) Anmeldenummer: 14745084.5
(22) Anmeldetag: 30.07.2014
(51) Int. Cl.: B60W 20/00, B60W 10/04, B60W 10/26, B60W 30/18, B60W 50/00

(54) **ANTRIEBSVORRICHTUNG FÜR EIN HYBRIDFAHRZEUG**
DRIVE DEVICE FOR A HYBRID VEHICLE
DISPOSITIF D'ENTRAÎNEMENT POUR VÉHICULE HYBRIDE

(30) Priorität: 21.08.2013 DE 102013013954
(43) Veröffentlichungstag der Anmeldung: 29.06.2016
(73) Patentinhaber: Audi AG, 85045 Ingolstadt (DE)
(72) Erfinder: BLASINSKI, Boris, 85080 Gaimersheim (DE)
(86) Internationale Anmeldenummer: PCT/EP2014/002081
(87) Internationale Veröffentlichungsnummer: WO 2015/024621

(56) Entgegenhaltungen:
- DE-A1-102008 008 863
- DE-A1-102010 010 149
- DE-A1-102011 082 336
- DE-A1-102011 085 149
- DE-A1-102011 089 085
- US-A1- 2009 277 701

## Beschreibung

Die Erfindung betrifft ein Hybridfahrzeug mit wenigstens einer Antriebsachse, die mittels einer Antriebsvorrichtung antreibbar ist, welche Antriebsvorrichtung einen Akkumulator, einer zum Austauschen von elektrischer Energie mit dem Akkumulator elektrisch gekoppelten elektrischen Maschine und eine Verbrennungskraftmaschine aufweist, welche Verbrennungskraftmaschine in einem aktiven Zustand die elektrische Maschine zum Erzeugen von elektrischer Energie mechanisch antreibt, und mit einer Steuereinheit, die die elektrische Maschine sowie die Verbrennungskraftmaschine steuert. Schließlich betrifft die Erfindung auch ein Verfahren zum Betreiben eines sowohl mittels einer elektrischen Maschine als auch mittels einer Verbrennungskraftmaschine antreibbaren Fahrzeugs, wobei aufgrund einer elektrischen Kopplung zwischen der elektrischen Maschine und einem Akkumulator des Hybridfahrzeugs ein Austausch von elektrischer Energie erfolgt und wobei die elektrische Maschine in einem aktiven Zustand der Verbrennungskraftmaschine von der Verbrennungskraftmaschine mechanisch angetrieben wird, so dass die elektrische Maschine elektrische Energie erzeugt.

Gattungsgemäße Hybridfahrzeuge mit Antriebsvorrichtungen und Verfahren zum Betrieb der Antriebsvorrichtung sind im Stand der Technik weitgehend bekannt, so dass es eines gesonderten druckschriftlichen Nachweises zum Stand der Technik nicht bedarf. Hybridfahrzeuge gehören zu den Fahrzeugen der allgemeinen Art, auch Kraftfahrzeuge genannt, und dienen der Fortbewegung an Land. Hybridfahrzeuge zeichnen sich dadurch aus, dass sie neben wenigstens einer elektrischen Maschine als Antrieb ergänzend eine Verbrennungskraftmaschine als Antrieb aufweisen.

Die elektrische Maschine wird in der Regel an einem Umrichter betrieben, der es erlaubt, eine elektrische Kopplung zwischen einem Akkumulator des Hybridfahrzeugs und der elektrischen Maschine herzustellen. Zu diesem Zweck stellt der Akkumulator einen Zwischenkreis bereit oder ist an einem solchen angeschlossen, an dem auch der Umrichter für die elektrische Maschine angeschlossen ist. Auf diese Weise erfolgt die elektrische Kopplung zwischen der elektrischen Maschine und dem Akkumulator. Der Zwischenkreis ist in der Regel als Gleichspannungszwischenkreis ausgebildet.

Bei Fahrzeugen der allgemeinen Art sind Verbrennungskraftmaschinen in der Regel über eine mechanische Kupplung mit der Antriebsachse des Fahrzeugs kuppelbar, damit ein Anfahren sowie auch das Durchführen von Schaltvorgängen während eines bestimmungsgemäßen Betriebes zweckmäßig durchführbar sind. Auch bei einem Hybridfahrzeug ist eine solche Kupplung in der Regel für die Verbrennungskraftmaschine vorgesehen, damit ein zuverlässiges Anfahren unabhängig von einer Betriebsbereitschaft der elektrischen Maschine durchgeführt werden kann. Bei konventionellen nicht hybridischen Fahrzeugen ist diese Funktion für den bestimmungsgemäßen Betrieb unerlässlich. In diesem Zusammenhang offenbart die DE 10 2010 010 149 A1 eine Kraftfahrzeugantriebsvorrichtung, gemäß dem Oberbegriff des Anspruchs 1. Ferner offenbart die DE 10 2011 082 336 A1 ein Verfahren zum Steuern von Energieverteilungsprozessen in einem Fahrzeug.

Die mechanische Kupplung bei Kraftfahrzeugen ist eine verschleißbehaftete Einrichtung und erfordert neben einem Kostenaufwand auch einen entsprechenden Wartungsaufwand.

Es ist die Aufgabe der Erfindung, hier eine Verbesserung zu erreichen.

Gelöst wird die Aufgabe durch ein Hybridfahrzeug und ein Verfahren gemäß den unabhängigen Ansprüchen. Vorteilhafte Weiterbildungen ergeben sich durch Merkmale der abhängigen Ansprüche.

Der Gedanke der Erfindung ist dem Grunde nach darauf gerichtet, die Kupplung zum Kuppeln der Verbrennungskraftmaschine mit der Antriebsachse zu reduzieren, insbesondere, sie zu vermeiden. Anders als Verbrennungskraftmaschinen können elektrische Maschinen nämlich aus dem Stand heraus zuverlässig und sicher zum Zwecke des Antriebs betrieben werden. Zugleich stellen elektrische Maschinen auch bei geringen Drehzahlen große Drehmomente bereit, so dass ein zuverlässiger Antrieb eines Fahrzeugs, insbesondere des Hybridfahrzeugs mittels der elektrischen Maschine erreicht werden kann.

Eine Verbrennungskraftmaschine benötigt hierzu eine Mindestdrehzahl, die erreicht werden muss, damit die Verbrennungskraftmaschine ein hinreichendes Drehmoment für einen Antriebsvorgang bereitstellen kann. Um das Drehmoment bei einem stehenden Fahrzeug von der Verbrennungskraftmaschine auf die Antriebsachse übertragen zu können, sind entsprechende Kupplungsvorrichtungen erforderlich. Wird anstelle der Verbrennungskraftmaschine lediglich die elektrische Maschine zum Anfahren des Fahrzeugs genutzt, entfällt das Erfordernis, die Verbrennungskraftmaschine zum Anfahren aufwendig mit der Antriebsachse kuppeln zu müssen.

Die Erfindung schlägt deshalb vor, dass bei einer Antriebsvorrichtung eines Hybridfahrzeugs die Steuereinheit dazu eingerichtet ist, zum Anfahren des Hybridfahrzeugs bis zu einer Grenzgeschwindigkeit, die einen Antrieb des Hybridfahrzeugs mittels der Verbrennungskraftmaschine erlaubt, ausschließlich die elektrische Maschine zu betreiben und den Betrieb der elektrischen Maschine und der Verbrennungskraftmaschine so zu steuern, dass beim Anhalten des Hybridfahrzeugs die elektrische Ladung des Akkumulators einen vorgebbaren Vergleichswert überschreitet, welcher Vergleichswert so ermittelt ist, dass die im Akkumulator gespeicherte elektrische Energie ein Anfahren des Hybridfahrzeugs mittels der elektrischen Maschine des Antriebs bis zur Grenzgeschwindigkeit erlaubt.

Die Grenzgeschwindigkeit ist durch Eigenschaften des Hybridfahrzeugs insbesondere in Bezug auf die Verbrennungskraftmaschine definiert, und bildet die Geschwindigkeit, bei der die Verbrennungskraftmaschine mit der Antriebsachse des Hybridfahrzeugs gekoppelt werden kann, wobei die Verbrennungskraftmaschine sodann ein Drehmoment zum Antrieb des Hybridfahrzeugs bereitstellen kann, vorzugsweise ohne dass die elektrische Maschine ergänzend ein Drehmoment für den Antrieb bereitzustellen braucht. Dieser Wert für die Grenzgeschwindigkeit kann in der Steuereinheit fest vorgegeben sein, so dass aus diesem Wert für die Grenzgeschwindigkeit die für das Anfahren erforderliche elektrische Energie ermittelbar ist. Die entsprechende Energiemenge ist deshalb beim Anhalten des Hybridfahrzeugs im Akkumulator als Mindestreserve vorzuhalten. Auf diese Weise wird sichergestellt, dass für das Anfahren des Hybridfahrzeugs immer hinreichend elektrische Energie vom Akkumulator bereitgestellt werden kann, so dass das Anfahren des Hybridfahrzeugs mittels der elektrischen Maschine ohne Eingriff der Verbrennungskraftmaschine erfolgen kann. Vorzugsweise erfolgt das Anfahren aus einem nicht fahrenden Zustand des Hybridfahrzeugs heraus, das heißt, bei einer Geschwindigkeit Null. Entsprechend bedeutet Anhalten insbesondere, ein Reduzieren der Geschwindigkeit des Hybridfahrzeugs bis zur Geschwindigkeit Null. Bei alternativen Ausführungsformen der Erfindung kann auch als Geschwindigkeit eine von Null abweichende Geschwindigkeit unterhalb der Grenzgeschwindigkeit vorgesehen sein. Alternativ kann anstelle der Grenzgeschwindigkeit auch eine Grenzdrehzahl definiert sein, für die ein Vergleichswert ermittelt wird. Dabei sind sich durch das Hybridfahrzeug bestimmte Parameter wie Fahrzeugmasse und/oder dergleichen zu berücksichtigen.

Hierdurch lässt sich nicht nur Aufwand bezüglich einer Kupplungsvorrichtung zum Kuppeln der Verbrennungskraftmaschine mit der Antriebsachse des Hybridfahrzeugs reduzieren, sondern es kann auch der Wirkungsgrad beim Anfahren erhöht werden, da die Nutzung einer Kupplung beim Anfahren in der Regel den Wirkungsgrad deutlich reduziert. Auf diese Weise kann insgesamt Energie, und zwar Brennstoff für die Verbrennungskraftmaschine eingespart werden. Zugleich reduzieren sich dadurch auch Emissionen des Hybridfahrzeugs.

Die Verbrennungskraftmaschine kann eine gewöhnliche Verbrennungskraftmaschine für Kraftfahrzeuge sein, beispielsweise unter Nutzung eines Kraftstoffs wie Benzin, Diesel, Gas, Alkohol und/oder dergleichen. Die elektrische Maschine ist insbesondere eine rotierende elektrische Maschine. Natürlich kann auch mehr als eine elektrische Maschine vorgesehen sein, insbesondere wenn das Hybridfahrzeug über mehrere Antriebsachsen verfügt und wenigstens zwei der Antriebsachsen mittels jeweils einer elektrischen Maschine antreibbar sind. Beispielsweise kann darüber hinaus vorgesehen sein, dass die Antriebsachse wenigstens ein Rad aufweist, welches mittels einer elektrischen Nabenmaschine als elektrischer Maschine antreibbar ist. Die elektrische Maschine ist in der Regel als rotierende elektrische Maschine ausgebildet und kann beispielsweise eine Gleichspannungsmaschine, eine Wechselspannungsmaschine, eine mehrphasige Wechselspannungsmaschine, insbesondere eine Drehstrommaschine oder dergleichen sein. Vorzugsweise ist die Drehstrommaschine eine Asynchronmaschine oder eine Synchronmaschine.

Der Akkumulator des Hybridfahrzeugs kann beispielsweise durch einen Blei-Säure-Akkumulator aber auch durch einen Lithium-Hydrid-Akkumulator, Kombinationen hiervon und/oder dergleichen gebildet sein. Der Akkumulator weist wenigstens eine elektrochemische Zelle, in der Regel jedoch eine Mehrzahl von elektrochemischen Zellen auf, die an eine vorgegebene Zwischenkreisspannung angepasst gewählt ist. Darüber hinaus können elektrochemische Zellen des Akkumulators sowohl in Reihenschaltung als auch in Parallelschaltung oder in Kombination hiervon verschaltet sein. Der Akkumulator dient der Speicherung von elektrischer Energie, die ihm in Form von elektrischem Strom über den Zwischenkreis zugeführt werden kann. Zugleich dient der Akkumulator zum Bereitstellen von elektrischer Energie, indem dem Akkumulator zu diesem Zweck ein elektrischer Strom entnommen wird. Der Akkumulator zeichnet sich also dadurch aus, dass er für seine bestimmungsgemäße Funktion keine Stoffe verbrauchend umwandelt. Eine Stoffumwandlung in der elektrochemischen Zelle ist in der Regel durch im Wesentlichen reversible chemische Prozesse bestimmt.

Die Kopplung des Akkumulators mit der elektrischen Maschine über den Umrichter erlaubt es, dem Akkumulator sowohl elektrische Energie zuzuführen, wenn die elektrische Maschine im Generatorbetrieb betrieben wird, als auch dem Akkumulator elektrische Energie zu entnehmen, insbesondere wenn die elektrische Maschine im Motorbetrieb betrieben wird. Der in der Regel vorgesehene Umrichter, an den die elektrische Maschine zu diesem Zweck angeschlossen ist, formt die elektrische Energie entsprechend um, so dass eine elektrische Anpassung der elektrischen Maschine an den Akkumulator erreicht werden kann.

Mittels der Steuereinheit wird der Betrieb der Antriebsvorrichtung insgesamt gesteuert. Dies umfasst sowohl die Steuerung der elektrischen Maschine als auch die Steuerung der Verbrennungskraftmaschine. Die Steuerung kann natürlich selbst segmentiert und mit Funktionsgruppen ausgebildet sein, die für die entsprechend zu steuernden Komponenten adaptiert sind. Insbesondere kann der Umrichter für die elektrische Maschine Bestandteil der Steuereinheit sein. Die Erfindung stellt sicher, dass beim Anhalten des Hybridfahrzeugs immer ausreichend elektrische Energie im Akkumulator vorhanden ist, so dass das Hybridfahrzeug ohne Nutzung der Verbrennungskraftmaschine allein mittels der elektrischen Maschine bis zur Grenzgeschwindigkeit angefahren werden kann. Bei Erreichen der Grenzgeschwindigkeit kann die Verbrennungskraftmaschine zugeschaltet werden, insbesondere ohne Nutzung von Kupplungseinrichtungen, wie sie im Stand der Technik zum Anfahren des Fahrzeugs mittels einer Verbrennungskraftmaschine erforderlich sind.

Besonders vorteilhaft erweist es sich, wenn die Steuereinheit situationsbedingt die erforderliche Energiemenge ermittelt, so dass auch Änderungen an der Antriebsvorrichtung, insbesondere in Bezug auf den Akkumulator, die elektrische Maschine und/oder die Verbrennungskraftmaschine berücksichtigt werden können.

Die Steuereinheit ermittelt einen Vergleichswert, der ein Maß für die Energiemenge ist, die im Akkumulator beim Anhalten des Hybridfahrzeugs wenigstens vorhanden sein soll. Entsprechend werden die Antriebsvorrichtung, und hier insbesondere die Verbrennungskraftmaschine und die elektrische Maschine gesteuert.

Damit die Steuereinheit ihre Aufgabe übernehmen kann, ist sie mit einer Detektionseinheit verbunden beziehungsweise umfasst sie eine Detektionseinheit, mittels der ein aktueller Wert für die im Akkumulator gespeicherte elektrische Energie ermittelt werden kann. Zugleich kann die Steuereinheit dazu eingerichtet sein, Fahrzeugparameter des Hybridfahrzeugs wie Geschwindigkeit oder dergleichen zu ermitteln, so dass sie beispielsweise Informationen über eine kinetische Energie des Hybridfahrzeugs ermitteln kann. Unter Berücksichtigung dieser Parameter kann die Steuereinheit die Antriebsvorrichtung entsprechend steuern, um sicherzustellen, dass beim Anhalten des Hybridfahrzeugs die erforderliche Menge an elektrischer Energie im Akkumulator gespeichert ist. Vorzugsweise ist vorgesehen, dass die Steuereinheit auch erfasst, welche elektrischen Komponenten des Hybridfahrzeugs die im Akkumulator gespeicherte elektrische Energie beeinflussen. Auf diese Weise kann eine genaue Erfassung und ein zuverlässiger Betrieb des Hybridfahrzeugs erreicht werden. Insbesondere kann ein Anfahrelement, wie beispielsweise eine Kupplung oder dergleichen für die Verbrennungskraftmaschine vereinfacht oder eingespart werden.

Der Akkumulator umfasst ferner einen separat betreibbaren Anfahrakkumulator, dessen elektrische Energie ausschließlich zum Anfahren des Hybridfahrzeugs bis zur Grenzgeschwindigkeit mittels der elektrischen Maschine dient. Durch den separaten Anfahrakkumulator kann erreicht werden, dass eine Entkopplung vom Akkumulator des Hybridfahrzeugs erfolgt, so dass eine bessere Sicherstellung der minimal erforderlichen elektrischen Energie zum Anfahren des Hybridfahrzeugs erreicht werden kann. Der Anfahrakkumulator kann ein separates Bauteil des Hybridfahrzeugs, insbesondere der Antriebsvorrichtung sein. Vorzugsweise ist er auf einfache Weise austauschbar angeordnet, so dass in einem Störungsfall, bei dem der Akkumulator zum Anfahren nicht mehr hinreichend elektrische Energie aufweist, er auf einfache Weise extern geladen werden kann. Vorzugsweise ist er als austauschbares Modul ausgebildet, so dass er gegebenenfalls lediglich auszutauschen ist, um die Anfahrbereitschaft des Hybridfahrzeugs wieder herzustellen.

Eine Weiterbildung der Erfindung sieht vor, dass die Verbrennungskraftmaschine anfahrelementfrei mit einer Antriebsachse des Hybridfahrzeugs kuppelbar ist. Auf diese Weise kann - wie oben bereits ausgeführt - der Wirkungsgrad beim Anfahren des Hybridfahrzeugs erhöht werden und der Aufwand für eine etwaige Kupplung reduziert werden.

Das Hybridfahrzeug kann mehr als eine Antriebsachse aufweisen, beispielsweise zwei Antriebsachsen oder mehr Antriebsachsen. Insbesondere kann vorgesehen sein, dass alle Achsen des Hybridfahrzeugs als Antriebsachsen ausgebildet sind. Es kann vorgesehen sein, dass für jede Antriebsachse eine eigene elektrische Maschine vorgesehen ist, die mittels der Steuereinheit steuerbar ist. Die elektrischen Maschinen können in diesem Fall entweder einzeln oder gemeinsam steuerbar sein. Vorzugsweise ist für jede elektrische Maschine ein eigener Umrichter vorgesehen. Die Umrichter sind vorzugsweise mittels der Steuereinheit steuerbar. Es kann darüber hinaus vorgesehen sein, dass jede Achse mit wenigstens einem Rad besetzt ist, wobei die elektrische Maschine in zumindest einem Rad als Nabenmaschine ausgebildet ist.

Sind mehr als eine elektrische Maschine vorgesehen, so können sämtliche elektrische Maschinen für das Anfahren vorgesehen sein. Es kann aber auch vorgesehen sein, dass lediglich eine einzige oder eine begrenzte Anzahl der Gesamtheit der elektrischen Maschinen zum Anfahren des Hybridfahrzeugs genutzt werden. Die Auswahl der Anzahl und der Art der elektrischen Maschinen, die in diesem Fall zum Anfahren benutzt werden sollen, können durch die Steuereinheit ermittelt und entsprechend gesteuert werden.

Weiterhin sieht die Erfindung verfahrensseitig vor, dass zum Anfahren des Hybridfahrzeugs bis zu einer Grenzgeschwindigkeit, die einen Antrieb des Hybridfahrzeugs mittels der Verbrennungskraftmaschine erlaubt, ausschließlich die elektrische Maschine betrieben wird und dass der Betrieb der elektrischen Maschine und der Verbrennungskraftmaschine so gesteuert wird, dass beim Anhalten des Hybridfahrzeugs die elektrische Ladung des Akkumulators einen vorgebbaren Vergleichswert überschreitet, welcher Vergleichswert so ermittelt wird, dass die im Akkumulator gespeicherte elektrische Energie ein Anfahren des Hybridfahrzeugs mittels der elektrischen Maschine bis zur Grenzgeschwindigkeit erlaubt.

Hiermit erreicht das Verfahren die Vorteile, die bereits zum Hybridfahrzeug genannt wurden.

Gemäß einem weiteren Aspekt der Erfindung wird der Vergleichswert in Abhängigkeit von Akkumulatorparametern eingestellt. Akkumulatorparameter können beispielsweise ein eine Kapazität des Akkumulators beeinflussender Parameter, insbesondere ein Alterungszustand des Akkumulators oder dergleichen sein. Dadurch kann die Genauigkeit der Ermittlung des Vergleichswerts verbessert werden.

Eine Weiterbildung sieht vor, dass der Vergleichswert in Abhängigkeit von Umgebungsparametern eingestellt beziehungsweise ermittelt wird. So können beispielsweise Umgebungstemperaturen, aber auch Akkumulatortemperaturen und/oder dergleichen berücksichtigt werden, um den Vergleichswert zu ermitteln beziehungsweise einzustellen.

Ein Akkumulatorparameter kann auch eine Akkumulatortemperatur sein, aus der sich unter Nutzung eines entsprechenden Kennfeldes für den jeweiligen Akkumulator eine temperaturabhängige Kapazität und/oder Energiemenge des Akkumulators ermitteln lässt.

Eine weitere Ausgestaltung der Erfindung sieht vor, dass der Vergleichswert beim Anfahren und/oder Anhalten neu ermittelt wird. Vorzugsweise erfolgt das neue Ermitteln des Vergleichswerts bei jedem Anfahren und/oder jedem Anhalten. Dadurch kann das Ermitteln des Vergleichswerts an eine aktuelle Situation, beispielsweise aktuell vorhandene Akkumulatorparameter oder dergleichen eingestellt werden. Die Genauigkeit der Ermittlung des Vergleichswerts kann weiter verbessert werden.

Gemäß einer weiteren Ausgestaltung wird vorgeschlagen, dass die elektrische Ladung des Akkumulators in Abhängigkeit einer Eigenschaft einer Halteposition ermittelt wird. Die Halteposition ist vorzugsweise eine geografische Position, bei der das Hybridfahrzeug am Ende eines Anhaltevorgangs steht. Unter Nutzung der geografischen Eigenschaften, beispielsweise einer Steigung, einem Gefälle und/oder dergleichen kann der Vergleichswert entsprechend angepasst ermittelt werden. Zu diesem Zweck kann vorgesehen sein, dass die Steuereinheit kommunikationstechnisch an eine Navigationseinrichtung des Hybridfahrzeugs oder auch kommunikationstechnisch an eine Einrichtung zum Bereitstellen geografischer Daten kommunikationstechnisch angeschlossen ist. Der kommunikationstechnische Anschluss kann beispielsweise drahtlos, insbesondere über ein Kommunikationsnetzwerk wie Universal Mobile Telecommunications System (UMTS) oder auch Long Term Evolution (LTE) oder dergleichen erfolgen.

Gemäß einer Weiterbildung wird vorgeschlagen, dass während des Anfahrens wenigstens ein elektrischer Verbraucher des Hybridfahrzeugs abgeschaltet und/oder sein Einschalten blockiert wird. Hierdurch kann erreicht werden, dass unvorhergesehene Beeinträchtigungen der für das Anfahren erforderlichen Energiemenge berücksichtigt werden. So kann beispielsweise vorgesehen sein, dass eine Klimaanlage oder auch eine Sitzheizung während des Anfahrens des Hybridfahrzeugs abgeschaltet wird, um die zur Verfügung stehende Energiemenge im Akkumulator zu erhöhen. Dadurch kann die Zuverlässigkeit des Anfahrens des Hybridfahrzeugs weiter verbessert werden.

Weitere Vorteile und Merkmale sind dem folgenden Ausführungsbeispiel anhand einer Figur zu entnehmen.

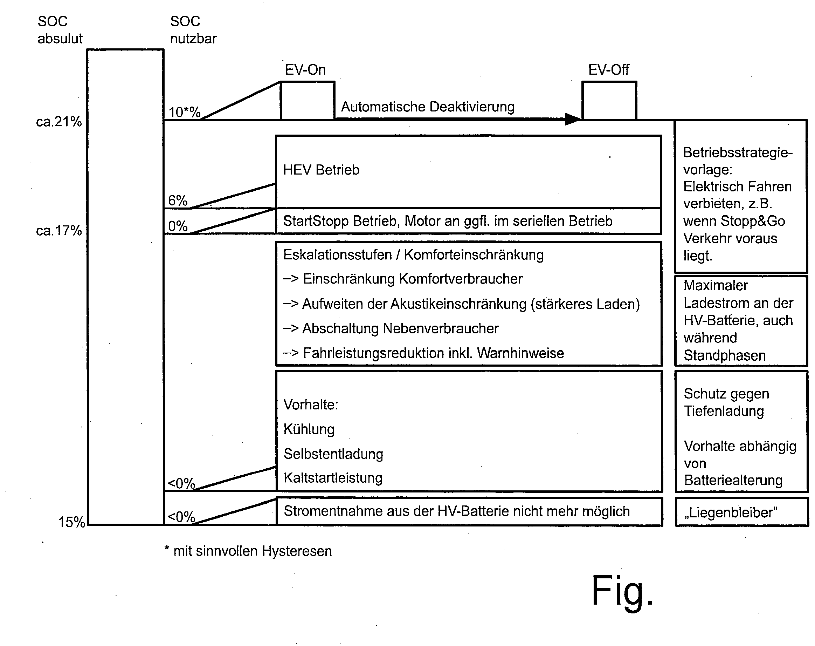

Es zeigt die einzige Figur in schematischer Diagrammdarstellung ein Verhalten bei geringem Ladungszustand eines Akkumulators eines Hybridfahrzeugs.

Das nicht dargestellte Hybridfahrzeug gemäß der Erfindung weist eine Antriebsachse und eine zweite nicht angetriebene Achse auf, wobei die Antriebsachse mittels einer nicht dargestellten elektrischen Maschine sowie einer ebenfalls nicht dargestellten Verbrennungskraftmaschine antreibbar ist. Vorliegend ist vorgesehen, dass für die Verbrennungskraftmaschine kein Anfahrelement in einem Getriebe der Verbrennungskraftmaschine vorgesehen ist. Bei solchen Hybridfahrzeugen kann die Verbrennungskraftmaschine also erst nach Erreichen einer bestimmten Fahrgeschwindigkeit beziehungsweise Drehzahl, nämlich der Grenzgeschwindigkeit beziehungsweise Grenzdrehzahl, über das Getriebe an die Straße gekoppelt werden. Unterhalb dieser Grenzgeschwindigkeit kann nur der elektrische Antrieb mittels der elektrischen Maschine für einen Vortrieb sorgen. Zu diesem Zweck weist das Hybridfahrzeug eine Traktionsbatterie als Akkumulator auf, die insbesondere im Bereich geringer elektrischer Ladung eine Begrenzung für die Fahrleistung sein kann.

Damit das Anfahren des Hybridfahrzeugs unter den vorgenannten Bedingungen zuverlässig realisiert werden kann und das Hybridfahrzeug auch bei gering geladener Traktionsbatterie noch betriebsbereit ist, insbesondere wenn ein Kraftstoff in einem Kraftstoffspeicher für die Verbrennungskraftmaschine noch nicht aufgebraucht ist, ist eine Steuereinheit vorgesehen, die die elektrische Maschine sowie die Verbrennungskraftmaschine der Antriebsvorrichtung des Hybridfahrzeugs steuert.

Die Steuereinheit ist dazu eingerichtet, zum Anfahren des Hybridfahrzeugs bis zu der Grenzgeschwindigkeit, die einen Antrieb des Hybridfahrzeugs mittels der Verbrennungskraftmaschine erlaubt, ausschließlich die elektrische Maschine zu betreiben und den Betrieb der elektrischen Maschine und der Verbrennungskraftmaschine so zu steuern, dass beim Anhalten des Hybridfahrzeugs die elektrische Ladung des Akkumulators einen vorgebbaren Vergleichswert überschreitet, welcher Vergleichswert so ermittelt ist, dass die in der Traktionsbatterie gespeicherte elektrische Energie ein Anfahren des Hybridfahrzeugs mittels der elektrischen Maschine der Antriebsvorrichtung bis zur Grenzgeschwindigkeit erlaubt.

Zu diesem Zweck ist eine Betriebsstrategie mittels verschiedener Eskalationsstufen vorgesehen, wodurch die bestimmungsgemäße erfindungsgemäße Funktion des zuverlässigen Anfahrens des Hybridfahrzeugs gewährleistet werden kann. Es ist vorgesehen, einen Energiebedarf zu prognostizieren und eine Ladestrategie für die Traktionsbatterie während der Laufzeit bis zum Anhalten des Hybridfahrzeugs zu ermitteln. Der Vergleichswert, der hierdurch entsprechend ermittelt wird, berücksichtigt vorzugsweise auch elektrische Nebenverbraucher, die beispielsweise reduziert und abgeschaltet werden können. Außerdem kann die Fahrleistungsgarantie über akustische Restriktionen priorisiert werden. Dies berücksichtigt, dass die Nutzung der Verbrennungskraftmaschine eine akustische Beeinträchtigung insbesondere bei kleinen Geschwindigkeiten zur Folge hat. Es kann vorgesehen sein, dass die in Abhängigkeit des Ladezustands der Traktionsbatterie die Grenzgeschwindigkeit beziehungsweise Grenzdrehzahl variiert wird.

Eine Ermittlung des Vergleichswerts erfolgt vorliegend an einer zentralen Stelle, über die die Steuereinheit drahtlos mittels einer Kommunikationsverbindung zugreifen kann. Dies ermöglicht eine genaue Ermittlung der erforderlichen elektrischen Energie in der Traktionsbatterie und damit des Vergleichswerts, wobei sich die Ermittlung auf die Auswertung von Fahrerhandlungen, Umfeldinformationen und eine Prädiktion kommender Fahrsituationen stützt.

Mit der Erfindung kann somit gewährleistet werden, dass auch bei Einsparung eines Anfahrelements für die Verbrennungskraftmaschine eine uneingeschränkte Anfahrperformance gewährleistet werden kann, weil eine vollständig entladene Traktionsbatterie vermieden wird. Nötige Energievorhalte für den Betrieb unterhalb einer Ankoppeldrehzahl der Verbrennungskraftmaschine können so klein wie möglich aber so groß wie nötig gehalten werden.

Die Fig. zeigt in dem Diagramm das Verhalten gemäß der Erfindung bei sinkendem State of Charge (SOC), das heißt bei sinkendem Ladezustand der Traktionsbatterie. In einem linken Balkendiagramm ist in Prozentzahlen der absolute Ladezustand gegenüber einem nutzbaren Ladezustand aufgetragen. Bei zehn Prozent nutzbarem Ladezustand erfolgt die automatische Deaktivierung. Bei null Prozent nutzbarer Ladung erfolgt ein Start Stop Betrieb, das heißt, die Verbrennungskraftmaschine wird angeschaltet und gegebenenfalls in einem seriellen Betrieb wird die elektrische Maschine als Generator betrieben, um die Traktionsbatterie zu laden.

Bei weiter abnehmendem Ladungszustand der Traktionsbatterie ergeben sich die folgenden Eskalationsstufen/Komforteinschränkungen:
- Einschränkung von Komfortverbrauchern
- Aufweiten der Akustikeinschränkung (stärkeres Laden)
- Abschalten Nebenverbraucher
- Fahrleistungsreduktion inklusive Warnhinweise

Bei weiterer Reduktion des Ladungszustands der Traktionsbatterie können für die Ermittlung des Vergleichswerts weitere Vorhalte berücksichtigt werden, beispielsweise für die Kühlung, die Selbstentladung der Traktionsbatterie, und/oder gegebenenfalls eine Kaltstartleistung, die insbesondere nach einer längeren Standphase des Hybridfahrzeugs erforderlich sein kann.

Eine weitere Reduktion des Ladungszustands der Traktionsbatterie führt dann bei einem absoluten Ladungszustand von etwa 15 Prozent dazu, dass aus der Traktionsbatterie (HV-Batterie) keine Stromentnahme mehr möglich ist.

Sinkt der SOC durch elektrisches Fahren bis auf ein Minimum ab, wird die elektrische Maschine frühzeitig zum Laden des elektrischen Energiespeichers, nämlich des Akkumulators, hier der Traktionsbatterie, verwendet. Kann der Energiebedarf der elektrischen Maschine nicht gedeckt werden, werden gemäß der Betriebsstrategie wie in der Fig. dargestellt, Schritt für Schritt die dort dargestellten Maßnahmen ergriffen.

Die Fig. zeigt im linken Bereich einen Balken, der einen Ladungszustand der Traktionsbatterie darstellt. An der linken Seite des Balkens ist der absolute Ladungszustand der Traktionsbatterie dargestellt. Vorliegend ist vorgesehen, dass ein Normalbetrieb bei einem absoluten Ladungszustand von 17% freigegeben ist. Diesem Ladungszustand ist an der rechten Seite des Balkens ein relativer Ladungszustand von 0% zugeordnet. Unterhalb eines absoluten Ladungszustands von 15% ist die Energienetnahme aus der Traktionsbatterie deaktiviert, vorliegend mittels einer nicht weiter dargestellten Hardwareschaltung, um die Traktionsbatterie vor einer Beschädigung aufgrund von Tiefentladung zu schützen.

An der rechten Seite des Balken sind die relativen Pegel des Ladungszustands angegeben, die die Eskalationsstufen hinsichtlich des Betriebs des Hybridfahrzeugs angeben. Oberhalb eines relativen Ladungszustands von 10%, der einem absoluten Ladungszustand von 21% entspricht, kann mittels einer EV-On/EV-Off-Taste in einem Cockpit des Hybridfahrzeugs vom Fahrer ein Fahrbetrieb möglichst unter Vermeidung der Nutzung der Verbrennungskraftmaschine aktiviert beziehungsweise deaktiviert werden. Ist dieser Fahrmodus aktiviert und wird der relative Ladungszustand von 10% erreicht beziehungsweise unterschritten, erfolgt automatisch die Deaktivierung, das heißt, die Nutzung der Verbrennungskraftmaschine wird für den weiteren Betrieb des Hybridfahrzeugs berücksichtigt, damit vorzugsweise ein Laden der Traktionsbatterie erfolgen kann.

In einem Bereich des relatives Ladungszustands zwischen etwa 10% und 6% erfolgt der Berieb des Hybridfahrzeugs sowohl unter Nutzung der elektrischen Maschine als auch der Verbrennungskraftmaschine, vorzugsweise um eine weitere Entladung der Traktionsbatterie zu vermeiden oder zu reduzieren oder gegebenenfalls auch eine Aufladung der Traktionsbatterie zu bewirken.

Sinkt der relative Ladungszustand der Traktionsbatterie auf 0%, wird die Verbrennungskraftmaschine eingeschaltet, um die elektrische Maschine im Generatorbetrieb zu betreiben.

Sinkt der relative Ladungszustand der Traktionsbatterie weiter ab, werden weitere Eskalationsstufen aktiviert, wie aus der Fig. ersichtlich. Insbesondere kann eine Akustikeinschränkung aufgeweitet werden, sodass durch früheren Einsatz der Verbrennungskraftmaschine ein vorzeitiges Laden der Traktionsbatterie erreicht werden kann. Schließlich können noch Vorhalte bezüglich einer Kühlung, einer Selbstentladung der Traktionsbatterie und einer Kaltstartleistung berücksichtigt werden.

Die Ladezustandsuntergrenze, bei der, wenn möglich, immer die elektrische Maschine zur Traktion verwendet wird, wird angehoben, falls aus car2car- oder Navigationsdateninformationen eine Stau- und/oder Stop-and-Go-Phase oder eine hohe Fahrbahnsteigung vorhersehbar ist.

Das vorstehend beschriebene Ausführungsbeispiel dient lediglich der Erläuterung der Erfindung und ist für diese nicht beschränkend.

Insbesondere kann anstelle der Geschwindigkeit auch eine Drehzahl vorgesehen sein, beispielsweise eine Grenzdrehzahl anstelle einer Grenzgeschwindigkeit und dergleichen.

## Patentansprüche

1. Hybridfahrzeug mit wenigstens einer Antriebsachse, die mittels einer Antriebsvorrichtung antreibbar ist, wobei die Antriebsvorrichtung einen Akkumulator, eine zum Austauschen von elektrischer Energie mit dem Akkumulator elektrisch gekoppelten elektrischen Maschine und eine Verbrennungskraftmaschine aufweist, welche Verbrennungskraftmaschine in einem aktiven Zustand die elektrische Maschine zum Erzeugen von elektrischer Energie mechanisch antreibt, und mit einer Steuereinheit, die die elektrische Maschine sowie die Verbrennungskraftmaschine steuert,
wobei die Steuereinheit dazu eingerichtet ist, zum Anfahren des Hybridfahrzeugs bis zu einer Grenzgeschwindigkeit, die einen Antrieb des Hybridfahrzeugs mittels der Verbrennungskraftmaschine erlaubt, ausschließlich die elektrische Maschine zu betreiben und den Betrieb der elektrischen Maschine und der Verbrennungskraftmaschine so zu steuern, dass beim Anhalten des Hybridfahrzeugs die elektrische Ladung des Akkumulators einen vorgebbaren Vergleichswert überschreitet, welcher Vergleichswert so ermittelt ist, dass die im Akkumulator gespeicherte elektrische Energie ein Anfahren des Hybridfahrzeugs mittels der elektrischen Maschine bis zur Grenzgeschwindigkeit erlaubt,
**dadurch gekennzeichnet,**
**dass** der Akkumulator einen separat betreibbaren Anfahrakkumulator umfasst, dessen elektrische Energie ausschließlich zum Anfahren des Hybridfahrzeugs bis zur Grenzgeschwindigkeit mittels der elektrischen Maschine dient.

2. Hybridfahrzeug nach Anspruch 1, **dadurch gekennzeichnet, dass** die Verbrennungskraftmaschine anfahrelementfrei mit einer Antriebsachse des Hybridfahrzeugs kuppelbar ist.

3. Verfahren zum Betreiben eines sowohl mittels einer elektrischen Maschine als auch mittels einer Verbrennungskraftmaschine antreibbaren Hybridfahrzeugs, wobei aufgrund einer elektrischen Kopplung zwischen der elektrischen Maschine und einem Akkumulator des Hybridfahrzeugs ein Austausch von elektrischer Energie erfolgt und wobei die elektrische Maschine in einem aktiven Zustand der Verbrennungskraftmaschine von der Verbrennungskraftmaschine mechanisch angetrieben wird, sodass die elektrische Maschine elektrische Energie erzeugt,
wobei zum Anfahren des Hybridfahrzeugs bis zu einer Grenzgeschwindigkeit, die einen Antrieb des Hybridfahrzeugs mittels der Verbrennungskraftmaschine erlaubt, ausschließlich die elektrische Maschine betrieben wird, und dass der Betrieb der elektrischen Maschine und der Verbrennungskraftmaschine so gesteuert wird, dass beim Anhalten des Hybridfahrzeugs die elektrische Ladung des Akkumulators einen vorgebbaren Vergleichswert überschreitet, welcher Vergleichswert so ermittelt wird, dass die im Akkumulator gespeicherte elektrische Energie ein Anfahren des Hybridfahrzeugs mittels der elektrischen Maschine bis zur Grenzgeschwindigkeit erlaubt,
**dadurch gekennzeichnet,**
**dass** das Anfahren mittels eines separat betreibbaren Anfahrakkumulators des Akkumulators erfolgt, dessen elektrische Energie ausschließlich zum Anfahren des Hybridfahrzeugs bis zur Grenzgeschwindigkeit mittels der elektrischen Maschine dient.

4. Verfahren nach Anspruch 3, **dadurch gekennzeichnet, dass** der Vergleichswert in Abhängigkeit von Akkumulatorparametern eingestellt wird.

5. Verfahren nach Anspruch 3 oder 4, **dadurch gekennzeichnet, dass** der Vergleichswert in Abhängigkeit von Umgebungsparametern eingestellt wird.

6. Verfahren nach einem der Ansprüche 3 bis 5, **dadurch gekennzeichnet, dass** der Vergleichswert bei einem Anfahren und/oder Anhalten neu ermittelt wird.

7. Verfahren nach einem der Ansprüche 3 bis 6, **dadurch gekennzeichnet, dass** der Vergleichswert in Anhängigkeit einer Eigenschaft einer Halteposition ermittelt wird.

8. Verfahren nach einem der Ansprüche 3 bis 7, **dadurch gekennzeichnet, dass** während des Anfahrens wenigstens ein elektrischer Verbraucher des Hybridfahrzeugs abgeschaltet und/oder sein Einschalten blockiert wird.

## Claims

1. Hybrid vehicle with at least one drive axle which is drivable by means of a drive device, wherein the drive device has a battery, an electric machine electrically coupled to the battery to exchange electric energy and an internal combustion engine which internal combustion engine mechanically drives the electric machine in an active state to generate electric energy, and with a control unit which controls the electric machine and the internal combustion engine,
wherein the control unit is configured to operate exclusively the electric machine in order to start-up the hybrid vehicle up to a speed limit, which allows a drive of the hybrid vehicle by means of the internal combustion engine and is configured to control the operation of the electric machine and the internal combustion engine such that the electric loading of the battery exceeds a predefinable comparative value when stopping the hybrid vehicle, said comparative value is determined such that the electric energy stored in the battery permits the hybrid vehicle to be started-up by means of the electric machine up to the speed limit,
**characterised in that**
the battery has a separately-operable start-up battery, whose electric energy serves exclusively for starting up the hybrid vehicle up to the speed limit by means of the electric machine.

2. Hybrid vehicle according to claim 1, **characterised in that** the internal combustion engine can be coupled to a drive axle of the hybrid vehicle without a start-up element.

3. Method for operating a hybrid vehicle that can be driven both by means of an electric machine and by means of an internal combustion engine, wherein an exchange of electric energy takes place owing to an electric coupling between the electric machine and a battery of the hybrid vehicle and wherein the electric machine is mechanically driven by the internal combustion engine in an active state of the internal combustion engine such that the electric machine generate electric energy,
wherein, in order to start up the hybrid vehicle up to the speed limit, which allows a drive of the hybrid vehicle by means of the internal combustion engine, the electric machine is exclusively operated and in that the operation of the electric machine and the internal combustion engine is controlled such that the electric loading of the battery exceeds a predefinable comparative value when stopping the hybrid vehicle, said comparative value is determined such that the electric energy stored in the battery permits the hybrid vehicle to be started up by means of the electric machine up to the speed limit,
**characterised in that**
start-up is carried out by means of a separately-operable start-up battery of the battery, whose electric energy serves exclusively for starting up the hybrid vehicle up to the speed limit by means of the electric machine.

4. Method according to claim 3, **characterised in that** the comparative value is set as a function of the battery parameters.

5. Method according to claim 3 or 4, **characterised in that** the comparative value is set as a function of environmental parameters.

6. Method according to any one of claims 3 to 5, **characterised in that** the comparative value is newly determined when starting-up and/or stopping.

7. Method according to any one of claims 3 to 6, **characterised in that** the comparative value is determined as a function of a property of a stop position.

8. Method according to any one of claims 3 to 7, **characterised in that** at least one electric consumer of the hybrid vehicle is switched off and/or its switching-on is blocked during the start-up.

## Revendications

1. Véhicule hybride avec au moins un essieu moteur, qui peut être entraîné au moyen d'un dispositif de propulsion, lequel dispositif de propulsion comporte un accumulateur, une machine électrique couplée électriquement à l'accumulateur en vue de l'échange d'énergie électrique et un moteur à combustion interne, lequel moteur à combustion interne entraîne mécaniquement la machine électrique dans un état actif afin de produire de l'énergie électrique, et avec une unité de commande qui commande la machine électrique ainsi que le moteur à combustion interne,
dans lequel l'unité de commande est conçue pour faire fonctionner exclusivement la machine électrique dans le but de faire démarrer le véhicule hybride jusqu'à une vitesse limite qui permet une propulsion du véhicule hybride au moyen du moteur à combustion interne et pour commander le fonctionnement de la machine électrique et du moteur à combustion interne de telle sorte que, lors de l'arrêt du véhicule hybride, la charge électrique de l'accumulateur dépasse une valeur de comparaison pouvant être prescrite, laquelle valeur de comparaison est déterminée de telle sorte que l'énergie électrique stockée dans l'accumulateur permet un démarrage du véhicule hybride au moyen de la machine électrique jusqu'à la vitesse limite,
**caractérisé en ce que** l'accumulateur comprend un accumulateur de démarrage qui peut fonctionner séparément et dont l'énergie électrique sert exclusivement au démarrage du véhicule hybride jusqu'à la vitesse limite au moyen de la machine électrique.

2. Véhicule hybride selon la revendication 1, **caractérisé en ce que** le moteur à combustion interne peut être couplé sans élément de démarrage à un essieu moteur du véhicule hybride.

3. Procédé de fonctionnement d'un véhicule hybride pouvant être entraîné aussi bien au moyen d'une machine électrique qu'au moyen d'un moteur à combustion interne,
dans lequel un échange d'énergie électrique s'effectue sur la base d'un couplage électrique entre la machine électrique et un accumulateur du véhicule hybride et dans lequel la machine électrique dans un état actif du moteur à combustion interne est entraînée mécaniquement par le moteur à combustion interne de telle sorte que la machine électrique produit de l'énergie électrique,
dans lequel on fait fonctionner exclusivement la machine électrique dans le but de faire démarrer le véhicule hybride jusqu'à une vitesse limite qui permet une propulsion du véhicule hybride au moyen du moteur à combustion interne et dans lequel le fonctionnement de la machine électrique et du moteur à combustion interne est commandé de telle sorte que, lors de l'arrêt du véhicule hybride, la charge électrique de l'accumulateur dépasse une valeur de comparaison pouvant être prescrite, laquelle valeur de comparaison est déterminée de telle sorte que l'énergie électrique stockée dans l'accumulateur permet un démarrage du véhicule hybride au moyen de la machine électrique jusqu'à la vitesse limite,
**caractérisé en ce que** le démarrage s'effectue au moyen d'un accumulateur de démarrage qui peut fonctionner séparément et dont l'énergie électrique sert exclusivement au démarrage du véhicule hybride jusqu'à la vitesse limite au moyen de la machine électrique.

4. Procédé selon la revendication 3, **caractérisé en ce que** la valeur de comparaison est réglée en fonction de paramètres d'accumulateur.

5. Procédé selon la revendication 3 ou 4, **caractérisé en ce que** la valeur de comparaison est réglée en fonction de paramètres environnementaux.

6. Procédé selon l'une des revendications 3 à 5, **caractérisé en ce que** la valeur de comparaison est déterminée à nouveau lors d'un démarrage et/ou d'un arrêt.

7. Procédé selon l'une des revendications 3 à 6, **caractérisé en ce que** la valeur de comparaison est déterminée en fonction d'une propriété d'une position d'arrêt.

8. Procédé selon l'une des revendications 3 à 7, **caractérisé en ce que**, pendant le démarrage, au moins un consommateur électrique du véhicule hybride est arrêté et/ou sa mise en service est bloquée.
